# EUROPÄISCHE PATENTSCHRIFT

(11) **EP 0 522 419 B1**
(45) Veröffentlichungstag und Bekanntmachung des Hinweises auf die Patenterteilung: **22.05.1996**
(21) Anmeldenummer: 92111066.4
(22) Anmeldetag: 30.06.1992
(51) Int. Cl.: C08G 18/67, C08G 18/08, C09D 175/14, C09D 11/10

(54) **Polyurethan-Dispersionen**
Polyurethane dispersions
Dispersions de polyuréthanes

(30) Priorität: 05.07.1991 DE 4122265
(43) Veröffentlichungstag der Anmeldung: 13.01.1993
(73) Patentinhaber: HOECHST AKTIENGESELLSCHAFT, D-65926 Frankfurt am Main (DE)
(72) Erfinder: Klein, Heinz-Peter, Dr., W-6500 Mainz-Laubenheim (DE); Schafheutle, Markus A., Dr., W-6203 Hochheim (DE); Walz, Gerhard, Dr., W-6200 Wiesbaden (DE)

(56) Entgegenhaltungen:
- EP-A- 0 033 898
- EP-A- 0 033 899
- EP-A- 0 099 207
- EP-A- 0 146 897
- EP-A- 0 249 222
- EP-A- 0 350 040
- EP-A- 0 473 169
- EP-A- 0 480 251

## Beschreibung

In EP 98 752 sind wäßrige Polyurethan-Dispersionen beschrieben. Diese Polyurethan-Dispersionen werden hergestellt, indem zunächst ein Diol, das ionische Gruppen enthält, ein Polyol-polyether oder Polyol-polyester und ein Überschuß eines Diisocyanats unter Bildung eines Präpolymeren umgesetzt werden. In der zweiten Stufe wird dieses Präpolymere, das freie Isocyanatgruppen enthält, dann mit einem Hydroxy-alkyl(meth)acrylat umgesetzt. Man erhält dabei ein zweites Präpolymer, das Vinylgruppen enthält und dieses Präpolymer wird dann zum Schluß in wäßriger Dispersion mit Radikale bildenden Initiatoren polymerisiert. Bedingt durch dieses Reaktionsschema entsteht dabei als zweites Präpolymer ein Produkt, das ausschließlich terminale Vinylgruppen enthält, Produkte mit lateralen Vinylgruppen sind dort nicht erwähnt.

In der EP-A 0 033 899 wird ein Verfahren zur Herstellung von Überzügen auf elektrisch leitfähigen Gegenständen beschrieben. Dabei wird ein anionisch modifiziertes Polyurethan mit einem Gehalt an olefinischen Doppelbindungen aus einer wäßrigen Dispersion elektrophoretisch abgeschieden. Der Film wird anschließend durch Bestrahlung mit UV- oder Elektronenstrahlen vernetzt.

In der EP-A 0 350 040 werden wäßrige Dispersionen von Urethan-Acrylat-Polymeren mit ionischen Gruppen beschrieben. Diese werden hergestellt, indem im ersten Schritt ein ungesättigtes Oligourethan gebildet wird durch Umsetzung mindestens eines organischen Polyisocyanats mit einer Mischung aus mindestens einem Makroglykol und mindestens einem Polyol, das im selben Molekül mindestens eine ionisierbare Gruppe und mindestens eine olefinische Doppelbindung enthält, im zweiten Schritt wird ein Salz gebildet, das im dritten Schritt in Wasser dispergiert wird und im vierten Schritt gemeinsam mit einem oder mehreren olefinisch ungesättigten Monomeren polymerisiert wird. Das Polyol ist das Reaktionsprodukt aus einer ungesättigten Dicarbonsäure und einem niedermolekularen mehrwertigen Alkohol. Das Urethan-Acrylat-Polymer enthält keine Vinylgruppen.

In der EP-A 0 249 222 wird ein strahlungshärtbares Harz beschrieben, das aus einem Polyurethan-Acrylat mit (Meth)Acryloyloxy-Gruppen am Ende des Moleküls besteht. Das Harz wird als Lösung auf ein Substrat aufgebracht und durch Bestrahlen mit Elektronenstrahlen gehärtet. Dispersionen werden nicht erwähnt.

Gegenstand der vorliegenden Erfindung sind wäßrige Polyurethan-Dispersionen, hergestellt durch radikalisch initiierte Polymerisation von Polyurethan-Makromonomeren mit einem Gehalt an Carboxyl-, Phosphonsäure- oder Sulfonsäuregruppen und lateralen Vinylgruppen sowie gegebenenfalls terminalen Vinylgruppen, Hydroxyl-, Urethan-, Thiourethan- und/oder Harnstoffgruppen.

Diese Polyurethan-Dispersionen können im Prinzip auf verschiedenen Wegen hergestellt werden. Ein Weg besteht darin, daß ein Polyadditionsprodukt hergestellt wird durch Polyaddition von Polyhydroxy-Verbindungen aus der Gruppe Polyhydroxy-polyether, Polyhydroxy-polyester oder Polyhydroxy-polycarbonate, weiterhin Polyhydroxycarbonsäuren, Polyhydroxyphosphonsäuren oder Polyhydroxysulfonsäuren, sowie Polyisocyanaten und einem mindestens zwei Hydroxy- sowie mindestens eine Vinylgruppe enthaltenden Monomeren. Die Mengenverhältnisse der Reaktanten, insbesondere an Polyisocyanat, werden dabei so gewählt, daß ein Makromonomer mit terminalen Hydroxylgruppen entsteht. Dieses Makromonomer, das außerdem Carboxyl-, Phosphonsäure- oder Sulfonsäuregruppen und laterale Vinylgruppen enthält, wird nach Überführung in eine wäßrige Dispersion über die Vinylgruppen mit radikalbildenden Initiatoren polymerisiert unter Bildung der Polyurethan-Dispersion, wobei in diesem Fall das Polyurethan noch Hydroxylgruppen trägt.

Ein zweiter Weg besteht darin, daß zunächst, wie bei der zuvor genannten Verfahrensvariante beschrieben, ein Polyadditionsprodukt hergestellt wird durch Polyaddition von Polyhydroxy-polyethern, Polyhydroxy-polyestern oder Polyhydroxy-polycarbonaten, weiterhin Polyhydroxycarbonsäuren, Polyhydroxyphosphonsäuren oder Polyhydroxysulfonsäuren sowie Polyisocyanaten und einem mindestens zwei Hydroxy- sowie mindestens eine Vinylgruppe enthaltenden Monomeren. Im Gegensatz zu der zuvor beschriebenen Verfahrensvariante wird hier das Mengenverhältnis an Polyisocyanat so gewählt, daß ein Makromonomer mit terminalen Isocyanatgruppen entsteht. Daneben enthält dieses Makromonomer noch Carboxyl-, Phosphonsäure- oder Sulfonsäuregruppen sowie laterale Vinylgruppen. Die freien Isocyanatgruppen dieses Makromonomers werden dann mit primären oder sekundären Aminen, Alkoholen oder Thioalkoholen unter Bildung von Harnstoff-, Urethan- oder Thiourethangruppen umgesetzt. Das so modifizierte Makromonomer wird dann ebenfalls über die Vinylgruppen mit radikalbildenden Initiatoren polymerisiert.

Ein dritter Weg besteht darin, daß, wie bei der zweiten Verfahrensvariante, ein Polyadditionsprodukt hergestellt wird durch Reaktion von Polyhydroxy-Verbindungen aus der Gruppe Polyhydroxy-polyether, Polyhydroxy-polyester oder Polyhydroxy-polycarbonate sowie Polyhydroxycarbonsäuren, Polyhydroxyphosphonsäuren oder Polyhydroxysulfonsäuren und Polyisocyanaten und zusätzlich einem Monomeren, das mindestens eine Vinylgruppe und mindestens zwei Hydroxygruppen enthält. Auch hier wird ein Überschuß von Polyisocyanat genommen, so daß das entstehende Makromonomer laterale Vinylgruppen, Carboxyl-, Phosphonsäure- bzw. Sulfonsäuregruppen sowie terminale Isocyanatgruppen besitzt. Dieses Makromonomer wird dann mit einem Monomeren umgesetzt, das außer einer Vinylgruppe noch eine Gruppe enthält, die mit Isocyanatgruppen reagiert, wie etwa die Hydroxyl-, Amino- oder Mercaptogruppe. Diese Monomeren können allein verwendet werden, es ist aber auch möglich, diese Monomeren im Gemisch mit primären oder sekundären Aminen, Alkoholen oder Thioalkoholen einzusetzen. Auf diese Weise erhält man ein Makromonomer, das laterale Vinylgruppen sowie terminale Vinylgruppen enthält. Dieses Makromonomer wird dann in der letzten Stufe ebenfalls über die Vinylgruppen mit radikalbildenden Initiatoren polymerisiert.

Eine vierte Verfahrensvariante besteht darin, daß das Monomer, welches die Carboxyl-, Phosphonsäure- bzw. Sulfonsäuregruppe trägt, erst zum Schluß in das zuvor gebildete Makromonomer eingebaut wird. Bei dieser Verfahrensvariante wird zunächst ein Polyadditionsprodukt gebildet aus Polyhydroxy-polyethern, Polyhydroxy-polyestern oder Polyhydroxy-carbonaten, Polyisocyanaten und Monomeren, die sowohl mindestens eine Vinylgruppe als auch mindestens zwei Hydroxylgruppen enthalten. Auch hier wird ein molarer Überschuß an Polyisocyanat genommen, so daß das entstehende Makromonomer terminale Isocyanatgruppen enthält. Daneben enthält dieses Makromonomer dann noch laterale Vinylgruppen.

Zum anderen kann das gebildete Zwischenprodukt in der Kette verlängert werden, indem die Isocyanatgruppen dieses Polyadditonsprodukts mit Diaminocarbonsäuren oder Diaminosulfonsäuren umgesetzt werden. Auch hier erfolgt abschließend dann eine radikalisch initiierte Polymerisation der Vinylgruppen.

Bevorzugt arbeitet man in der Weise, daß man die Di-hydroxyvinylverbindung nicht gleichzeitig mit dem Polyol bei der Polyaddition einbaut, sondern indem man zunächst ein Präpolymer allein aus Polyol, Polyisocyanat und gegebenenfalls Polyhydroxysäure zu einem OH- oder NCO-terminierten Präpolymeren umsetzt. In einer zweiten Stufe wird dieses Präpolymer dann mit der Di-hydroxyvinylverbindung und weiterem Polyisocyanat zu dem Vinylgruppen enthaltenden OH- oder NCO-terminierten Makromonomer umgesetzt.

In folgenden sollen die für die Herstellung der erfindungsgemäßen Polyurethan-Dispersionen benötigten Ausgangsverbindungen im einzelnen näher beschrieben werden.

Als Polyhydroxy-polyether kommen Verbindungen der Formel

H -[- O - (CHR)ₙ-]ₘ OH

infrage, in der
- R: Wasserstoff oder ein niedriger Alkylrest, gegebenenfalls mit verschiedenen Substituenten, ist,
- n: eine Zahl von 2 bis 6 und
- m: eine Zahl von 10 bis 120 ist.
Beispiele sind Poly(oxytetramethylen)glykole,
Poly(oxyethylen)glykole und Poly(oxypropylen)glykole. Die bevorzugten Polyhydroxy-polyether sind Poly(oxypropylen)glykole mit einem Molekulargewicht im Bereich von 400 bis 5000.

Die Polyhydroxy-polyester werden hergestellt durch Veresterung von organischen Polycarbonsäuren oder ihren Anhydriden mit organischen Polyolen. Die Polycarbonsäuren und die Polyole können aliphatische oder aromatische Polycarbonsäuren und Polyole sein.

Die zur Herstellung verwendeten Polyole schließen Alkylenglykole wie Ethylenglykol, Butylenglykol, Neopentylglykol, Hexandiol-1,6 und andere Glykole wie Dimethylolcyclohexan, 2,2-Bis(4-hydroxycyclohexyl)propan sowie Trishydroxyalkylalkane, wie z.B. Trimethylolpropan und Tetrakishydroxyalkylalkane, wie z.B. Pentaerythrit ein.

Die Säurekomponente des Polyesters besteht in erster Linie aus niedermolekularen Polycarbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebazinsäure, Maleinsäure, Glutarsäure, Hexachlorheptandicarbonsäure, Alkyl- und Alkenylbernsteinsäure, z.B. n-Octenylbernsteinsäure, n- und iso-Dodecenylbernsteinsäure, Tetrachlorphthalsäure, Trimellitsäure und Pyromellitsäure. Anstelle dieser Säuren können auch ihre Anhydride, soweit diese existieren, verwendet werden. Als Polycarbonsäuren lassen sich auch Dimer- und Trimerfettsäuren einsetzen.

Unter den Begriffen Polyhydroxy-polyether und Polyhydroxy-polyester sind auch solche Produkte dieser Art zu verstehen, die Monomeren mit Carboxyl-, Phosphonsäure- oder Sulfonat-Gruppen enthalten.

Ferner lassen sich bei der Erfindung auch Polyhydroxypolyester, die sich von Lactonen ableiten, benutzen. Diese Produkte erhält man beispielsweise durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 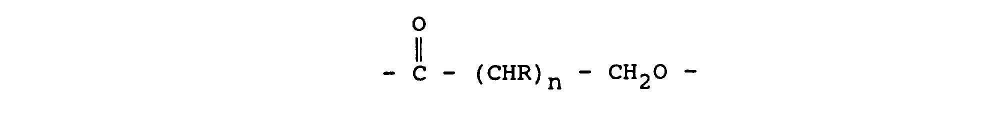 entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeinen Formel dargestellt werden: 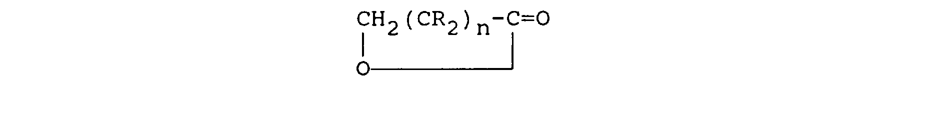 in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Ethylenglykol, 1,3-Propandiol, 1,4-Butandiol, Hexandiol-1,6, Dimethylolcyclohexan, Trimethylolpropan und Pentaerythrit.

Als Ausgangsverbindungen kommen weiterhin Polycarbonatpolyole bzw. Polycarbonat-diole in Frage, die der allgemeinen Formel 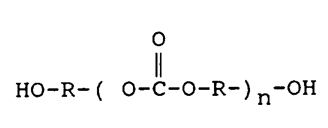 entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat, oder Phosgen herstellen. Gemische solcher Polyole können ebenfalls eingesetzt werden. Mischungen von Polyhydroxy-polyethern, Polyhydroxy-polyestern und Polyhydroxy-polycarbonaten sind ebenfalls möglich.

Die zuvor beschriebenen Polyhydroxy-polyether, Polyhydroxy-polyester und Polyhydroxy-polycarbonate können allein oder gemeinsam eingesetzt werden. Darüberhinaus können diese Polyhydroxyverbindungen auch zusammen mit unterschiedlichen Mengen an niedermolekularen, isocyanatreaktiven Polyolen, Polyaminen oder Polymercaptanen eingesetzt werden. Als Verbindungen dieser Art kommen beispielsweise Ethylenglykol, Butandiol, Hexandiol-1,6, Dimethylolcyclohexan, 2,2-Bis(4-hydroxycyclohexyl)propan, Pentaerythrit, Trimethylolpropan, Ethylendiamin, Propylendiamin, Hexamethylendiamin in Frage.

Als weiterer Baustein für die Herstellung der erfindungsgemäßen Polyurethan-Dispersionen werden niedermolekulare Polyole, vorzugsweise Diole, eingesetzt, die weiterhin noch eine ionische Gruppe in Form der Carbonsäure-, Phosphonsäure- oder Sulfonsäuregruppe enthalten. Beispiele für diese Gruppe von Monomeren sind α-C₂-C₁₀-Bis-hydroxycarbonsäuren wie z.B. Dihydroxypropionsäure, Dimethylolpropionsäure, Dihydroxyethylpropionsäure, Dimethylolbuttersäure, Dihydroxybernsteinsäure, Dihydroxybenzoesäure oder 3-Hydroxy-2-hydroxymethylpropansulfonsäure, 1,4-Dihydroxybutansulfonsäure.

Diese Monomeren werden vorzugsweise vor der Umsetzung mit einem tertiären Amin wie beispielsweise Trimethylamin, Triethylamin, Dimethylanilin, Diethylanilin oder Triphenylamin neutralisiert, um eine Reaktion der Säuregruppe mit dem Isocyanat zu vermeiden. Ist die Wahrscheinlichkeit einer solchen Reaktion nur gering, können die Säuregruppen auch erst nach ihrem Einbau in das Polyurethan-Makromonomer neutralisiert werden. Die Neutralisation erfolgt dann mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak. Daneben kann die Neutralisation auch mit Mischungen aus Aminen und Ammoniak vorgenommen werden.

Beispiele für geeignete Polyisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatocyclophenyl)methan, 4,4'-Diisocyanatodiphenylether, 2,3-Bis-(8-isocyanatooctyl)-4-octyl-5-hexylcyclohexen, Trimethylhexamethylendiisocyanate, Tetramethylxylylendiisocyanate, Isocyanurate von obigen Diisocyanaten sowie Allophanate von obigen Diisocyanaten. Gemische solcher Di- oder Polyisocyanate können ebenfalls eingesetzt werden.

Es ist von besonderer Bedeutung für die erfindungsgemäßen Polyurethan-Dispersionen, daß die Makromonomeren, die zu diesen Dispersionen führen, laterale Vinylgruppen sowie gegebenenfalls auch terminale Vinylgruppen enthalten. Der Begriff terminale Vinylgruppen soll solche Vinylgruppen bezeichnen, die am Anfang oder Ende der Polymerkette hängen, laterale Vinylgruppen sind dagegen solche, die nicht am Anfang oder Ende der Polymerkette hängen, sondern dazwischen eingebaut sind.

Die lateralen Vinylgruppen erhält man durch den Einbau von solchen Monomeren in das Makromonomer, die mindestens zwei Hydroxylgruppen und mindestens eine Vinylgruppe aufweisen. Beispiele hierfür sind Trimethylolpropan-(TMP)derivate wie z.B. TMP-Monoallylether (2-Propenyloxy-2-hydroxymethyl-propanol), TMP-Mono(meth)acrylat (2-(Meth)acryloyloxy-2-hydroxymethyl-propanol); Glycerinmono(meth)acrylat; Addukte von α, β-ungesättigten Carbonsäuren, wie (Meth)acrylsäure, an Diepoxide, z.Bsp. Bisphenol-A-diglycidylether, Hexandioldiglycidylether; Addukte von Dicarbonsäuren, wie z.Bsp. Adipinsäure, Terephthalsäure oder dgl. an (Meth)acrylsäure-glycidylester; Monovinylether von Polyolen.

Terminale Vinylgruppen erhält man durch die Reaktion der Isocyanat-Gruppen enthaltenden Makromonomeren mit Vinylverbindungen, die eine gegenüber Isocyanat-Gruppen reaktive Gruppe enthalten. Beispiele hierfür sind Umsetzungsprodukte aus Monoepoxiden und α,β-ungesättigten Carbonsäuren wie etwa Reaktionsprodukte aus Versaticsäureglycidylester und (Meth)acrylsäure, Umsetzungsprodukte aus α, β-ungesättigten Glycidylestern bzw. -ethern mit Monocarbonsäuren, beispielsweise Reaktionsprodukte aus Glycidyl(meth)acrylat und Stearinsäure oder Leinölfettsäure und fernerhin Hydroxyalkyl(meth)acrylate, z.B. Hydroxyethyl(meth)acrylat oder Hydroxypropyl(meth)acrylat, sowie (Meth)acrylate mit Aminogruppen, z.B. t-Butylaminoethylmethacrylat.

Die aus diesen Monomeren aufgebauten Makromonomeren werden, soweit sie nach der zweiten bzw. dritten Verfahrensvariante hergestellt werden, zusätzlich noch mit Aminen, Alkoholen und/oder Thioalkoholen umgesetzt. Hierzu wird das in der ersten Stufe erzeugte Zwischenprodukt, das terminale Isocyanatgruppen und laterale Vinylgruppen, sowie Carboxyl-, Phosphonsäure- oder Sulfonsäuregruppen enthält, vollständig oder teilweise mit Aminen, Alkoholen und/oder Thioalkoholen umgesetzt. Hierfür kommen beispielsweise in Frage primäre Amine wie Propylamin, Butylamin, Pentylamin, 2-Amino-2-methylpropanol, Ethanolamin, Propanolamin; sekundäre Amine wie Diethanolamin, Dibutylamin, Diisopropanolamin; primäre Alkohole wie Methanol, Ethanol, Propanol, Butanol, Hexanol, Dodecanol, Stearylalkohol; sekundäre Alkohole wie Isopropanol, Isobutanol und die entsprechenden Thioalkohole.

Bei der vierten Verfahrensvariante werden die Isocyanat-gruppen des Zwischenprodukts zum einen nach an sich bekannten Methoden mit Aminocarbonsäuren, Aminosulfonsäuren, Aminophosphonsäuren, Hydroxycarbonsäuren oder Hydroxysulfonsäuren weiter umgesetzt. Hierfür kommen beispielsweise in Frage Aminocapronsäure, Aminoessigsäure, Aminobuttersäure, Aminolaurinsäure, Hydroxybuttersäure, Aminomethansulfonsäure, Aminoethansulfonsäure, Aminopropansulfonsäure oder die analogen Aminophosphonsäuren, Salicylsäure, Hydroxystearinsäure, 2-Hydroxyethansulfonsäure.

Die Herstellung der Zwischenprodukte in den ersten Stufen erfolgt nach den üblichen und in der Urethan-Chemie bekannten Methoden. Hierbei können als Katalysatoren tertiäre Amine, wie z.B. Triethylamin, Dimethylbenzylamin, Diazabicyclooctan sowie Dialkylzinn (IV)-Verbindungen, wie z.B. Dibutylzinndilaurat, Dibutylzinndichlorid, Dimethylzinndilaurat, eingesetzt werden. Die Reaktion findet ohne Lösemittel in der Schmelze statt, in Anwesenheit eines Lösemittels oder in Anwesenheit eines sogenannten Reaktivverdünners. Als Lösemittel kommen solche in Frage, die späterhin durch Destillation entfernt werden können, beispielsweise Methylethylketon, Methylisobutylketon, Dioxan, Aceton, Tetrahydrofuran, Toluol, Xylol. Diese Lösemittel können ganz oder teilweise nach der Herstellung der Polyurethan-Makromonomeren oder nach der radikalischen Polymerisation abdestilliert werden. Daneben kann man auch wasserverdünnbare hochsiedende Lösemittel, zum Beispiel N-Methylpyrrolidon, einsetzen, die dann in der Dispersion verbleiben. Vor dem Dispergierprozeß können noch weitere Lösemittel, wie z.B. Glykolether oder deren Ester, zugegeben werden. Geeignete Glykolether sind Z.B. Butylglykol, Butyldiglykol, Methoxypropanol, Dipropylenglykolmonomethylether oder Diglykoldimethylether. Bei den Reaktivverdünnern handelt es sich um α, β-ungesättigte Monomere, die in der Endstufe mit den Vinylgruppen enthaltenden Makromonomeren copolymerisiert werden. Beispiele für solche Reaktivverdünner sind α, β-ungesättigte Vinylmonomeren wie Alkylacrylate, -methacrylate und -crotonate mit 1 bis 20 Kohlenstoffatomen im Alkylrest, Di-, Tri-, und Tetracrylate, -methacrylate, -crotonate von Glykolen, tri- und tetrafunktionellen Alkoholen, substituierte und unsubstituierte Acryl- und Methacrylamide, Vinylether, α, β-ungesättigte Aldehyde und Ketone, Vinylalkylketone mit 1 bis 20 Kohlenstoffatomen im Alkylrest, Vinylether, Vinylester, Diester von α, β-ungesättigten Dicarbonsäuren, Styrol, Styrolderivate, wie z.B. α-Methylstyrol.

Die nach den zuvor beschriebenen Verfahrensvarianten erhaltenen Makromonomeren werden dann neutralisiert, falls die sauren Gruppen in den Monomeren, die solche Gruppen tragen, nicht bereits von vornherein in neutralisierter Form eingesetzt wurden.

Die Neutralisation erfolgt mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylaminomethylpropanol, Dimethylisopropanolamin oder mit Ammoniak. Daneben kann die Neutralisation auch mit Mischungen aus Aminen und Ammoniak vorgenommen werden.

Zur Herstellung der erfindungsgemäßen Polyurethan-Dispersionen werden die nach den zuvor beschriebenen Herstellvarianten erhaltenen Makromonomeren, die Vinylgruppen enthalten, durch Zugabe von Wasser in eine wäßrige Dispersion überführt und nach an sich bekannten Methoden durch radikalisch initiierte Polymerisation polymerisiert. Bei dieser Polymerisation können, falls nicht von vornherein als sogenannte Reaktivverdünner vorhanden, Monomere dieser Art, wie zuvor beschrieben, zugegeben werden, die dann mit dem Polyurethan-Makromonomeren copolymerisiert werden.

Weiterhin können unmittelbar vor oder während der radikalischen Polymerisation auch noch Carboxyl-, Hydroxyl-, Amino-, Ether- und Mercapto-funktionelle α, β-ungesättigte Vinylmonomeren zugegeben werden. Beispiele hierfür sind Hydroxylethyl(meth)acrylat, Hydroxylpropyl(meth)acrylat, Glycidyl(meth)acrylat, Dimethylaminoethylmethacrylat, t-Butylaminoethylmethacrylat, (Meth)acrylsäure oder Crotonsäure. Der Gehalt an copolymerisierten Vinylmonomeren beträgt 0 bis 95 Gew.-%, bevorzugt 5 bis 70 Gew.-%, bezogen auf den Feststoff der Polyurethan-Dispersion. Das Verhältnis von Weich- und Hartsegmenten in den Polyurethan-Makromonomeren beträgt 0,30 bis 6, besonders bevorzugt von 0,8 bis 3. Als Initiatoren für die Polymerisation kommen die bekannten radikalbildenden Initiatoren in Frage wie Ammoniumperoxidisulfat, Kaliumperoxidsulfat, Natriumperoxidsulfat, Wasserstoffperoxid, organische Peroxide, wie z.B. Cumolhydroperoxid, t-Butylhydroperoxid, Di-tert.-butylperoxid, Dioctylperoxid, tert.-Butylperpivalat, tert.-Butylperisononanoat, tert.-Butylperethylhexanoat, tert.-Butylperneodecanoat, Di-2-ethylhexylperoxydicarbonat, Diisotridecylperoxidicarbonat sowie Azoverbindungen, wie z.B. Azo-bis(isobutyronitril), Azo-bis(4-cyanovaleriansäure), oder die üblichen Redoxsysteme, z.B. Natriumsulfit, Natriumdithionit, Ascorbinsäure und organische Peroxide oder Wasserstoffperoxid. Außerdem können noch Regler (Mercaptane), Emulgatoren, Schutzkolloide und andere übliche Hilfsstoffe zugegeben werden.

Erfolgte die Herstellung der Makromonomere in einem aus der wäßrigen Phase fraktionierbaren bzw. mit Wasser ein Azeotrop bildenden Lösemittel, beispielsweise in Aceton, Methylethylketon, Methylisobutylketon, Dioxan, Tetrahydrofuran, Toluol oder Xylol, so wird dieses Lösemittel abschließend aus der Dispersion destillativ entfernt. Man erhält in allen Fällen wäßrige Polyurethan-Dispersionen. Die Säurezahlen dieser Polyurethan-Dispersionen liegen im Bereich von 5 bis 80, besonders bevorzugt im Bereich von 10 bis 40 Einheiten.

Weitere Einzelheiten zur Herstellung der Makromonomeren und deren Polymerisation zu den erfindungsgemäßen Polyurethan-Dispersionen ergeben sich aus den folgenden allgemeinen Verfahrensbeschreibungen. Diese Verfahrensbedingungen stellen bevorzugte Ausführungsformen dar.

### 1. Lösemittelfrei

### a. ohne Hilfslösemittel

### α. mit terminalen OH-Gruppen

Bei Temperaturen von 100 bis 150 °C, besonders bevorzugt von 120 bis 135 °C, werden die Polyhydroxysäure und gegebenenfalls niedermolekulare Polyole in einem Polyol mit einem mittleren Molekulargewicht von 400 bis 5000 gelöst und mit einem Polyisocyanat oder Polyisocyanatmischungen zu einem OH-terminierten Produkt mit einem mittleren Molekulargewicht (Mn) von 500 bis 12000, besonders bevorzugt von 600 bis 8000, umgesetzt. Nach dem Abkühlen auf eine Temperatur von 30 bis 100 °C, besonders bevorzugt von 50 bis 80 °C, werden ein nicht isocyanatreaktives Comonomer (Reaktivverdünner) sowie eine mindestens difunktionelle, NCO-reaktive Vinylverbindung zugegeben. Bei dieser Temperatur wird durch weitere Zugabe von Polyisocyanat, das im Unterschuß zu den OH-Komponenten vorliegt, zu einem OH-funktionellen Polyurethanmakromonomeren mit einem mittleren Molekulargewicht von 700 bis 24000, besonders bevorzugt von 800 bis 16000, umgesetzt. Diese so erhaltene Harzlösung wird nach Neutralisation mit Aminen oder anderen Basen in Wasser dispergiert. Zu der so erhaltenen Dispersion können noch weitere Vinyl-Comonomeren vor oder während der noch zu erfolgenden radikalischen Polymerisation gegeben werden. In der wäßrigen Dispersion werden dann mit radikalbildenden Initiatoren die freien Vinylverbindungen bei einer Temperatur von 0 bis 95 °C, besonders bevorzugt von 40 bis 95 °C, und bei Verwendung von Redoxsystemen bei einer Temperatur von 30 bis 70 °C polymerisiert. Dabei entsteht eine lösemittelfreie Polyurethan-Dispersion.

### β. mit terminalen Urethan-, Thiourethan- oder Harnstoffgruppierungen

Bei Temperaturen von 100 bis 150 °C, besonders bevorzugt von 120 bis 135 °C, werden die Polyhydroxysäure und gegebenenfalls niedermolekulare Polyole in einem Polyol mit einem mittleren Molekulargewicht von 400 bis 5000 gelöst und mit einem Polyisocyanat oder Polyisocyanatmischungen zu einem OH-terminierten Produkt mit einem mittleren Molekulargewicht (Mn) von 500 bis 12000, besonders bevorzugt von 600 bis 8000, umgesetzt. Nach dem Abkühlen auf eine Temperatur von 30 bis 100 °C, besonders bevorzugt von 50 bis 80 °C, werden ein nicht isocyanatreaktives Comonomer (Reaktivverdünner) sowie eine mindestens difunktionelle, NCO-reaktive Vinylverbindung zugegeben. Bei dieser Temperatur wird durch weitere Zugabe von Polyisocyanat ein NCO-terminiertes Harz aufgebaut und anschließend mit einer monofunktionellen, NCO-reaktiven Verbindung zu einem Polyurethanmakromonomeren mit terminalen Urethan, Thiourethan oder Harnstoffgruppierungen und einem mittleren Molekulargewicht von 700 bis 24000, besonders bevorzugt von 800 bis 16000, umgesetzt. Diese so erhaltene Harzlösung wird nach Neutralisation mit Aminen oder anderen Basen in Wasser dispergiert. Zu der so erhaltenen Dispersion können noch weitere Vinyl-Comonomeren vor oder während der noch zu erfolgenden radikalischen Polymerisation gegeben werden. In der wäßrigen Dispersion werden dann mit radikalbildenden Initiatoren die freien Vinylverbindungen bei einer Temperatur von 0 bis 95 °C, besonders bevorzugt von 40 bis 95 °C, und bei Verwendung von Redoxsystemen bei einer Temperatur von 30 bis 70 °C polymerisiert. Dabei entsteht eine lösemittelfreie Polyurethan-Dispersion.

### b. mit Hilfslösemittel

### α. mit terminalen OH-Gruppen

Im Unterschied zu Verfahren 1.a. α werden hier alle Polyol-Komponenten - auch die NCO-reaktive Vinylverbindung in einem aus der wäßrigen Phase fraktionierbaren bzw. mit Wasser ein Azeotrop bildendes Lösemittel gelöst und direkt mit Polyisocyanat oder Polyisocyanatmischungen zu einem OH-terminierten Polyurethan-Makromonomeren mit einem Molekulargewicht von 500 bis 30000, besonders bevorzugt von 700 bis 20000, umgesetzt. Der Lösemittelgehalt beträgt 1 bis 80 Gew.-%, besonders bevorzugt zwischen 10 bis 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach Neutralisation mit Aminen oder anderen Basen wird in Wasser dispergiert. Anschließend wird das Hilfslösemittel, eventuell unter leichtem Vakuum, aus der wäßrigen Phase destilliert. Zu dieser lösemittelfreien Dispersion können noch Comonomeren vor oder während der noch zu erfolgenden radikalischen Polymerisation gegeben werden. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 70 °C zu einer lösemittelfreien Polyurethan-Dispersion polymerisiert.

### b. mit Hilfslösemittel

### β. mit terminalen Urethan-, Thiourethan- oder Harnstoffgruppierungen

Im Unterschied zu Verfahren 1.a.β werden hier alle Polyol-Komponenten - auch die NCO-reaktive Vinylverbindung - in einem aus der wäßrigen Phase fraktionierbaren bzw. mit Wasser ein Azeotrop bildendes Lösemittel gelöst und direkt mit Polyisocyanat oder Polyisocyanatmischungen zum NCO-terminierten Produkt umgesetzt. Der Lösemittelgehalt beträgt 1 bis 80 Gew.-%, besonders bevorzugt zwischen 10 bis 50 Gew.-%, bezogen auf den Festkörper des Polyurethan-Makromonomers. Die Temperatur für diesen Schritt liegt zwischen 30 und 100 °C, besonders bevorzugt zwischen 50 und 80 °C. Nach der weiteren Umsetzung mit einer monofunktionellen, isocyanatreaktiven Verbindung zu einem Polyurethan-Makromonomeren mit Urethan-, Thiourethan- oder Harnstoffgruppierungen und einem Molekulargewicht von 500 bis 30000, besonders bevorzugt von 700 bis 20000, wird mit Aminen oder anderen Basen neutralisiert und in Wasser dispergiert. Anschließend wird das Hilfslösemittel, eventuell unter leichtem Vakuum, aus der wäßrigen Phase destilliert. Zu dieser lösemittelfreien Dispersion können noch Comonomeren vor oder während der noch zu erfolgenden radikalischen Polymerisation gegeben werden. Danach wird mit radikalbildenden Initiatoren bei einer Temperatur zwischen 0 und 95 °C, besonders bevorzugt zwischen 40 und 95 °C, bei Verwendung von Redoxsystemen bei einer Temperatur von 30 bis 70 °C zu einer löesemittelfreien Polyurethan-Dispersion polymerisiert.

Als Lösemittel kommen bei den Verfahren entsprechend 1.b.α und 1.b.β zum Beispiel Aceton, Tetrahydrofuran, Dioxan, Methylethylketon, Methylisobutylketon, Toluol oder Xylol in Frage.

### 2. Lösemittelhaltig

Bei Benutzung eines nichtdestillierbaren Hilfslösemittels wie zum Beispiel N-Methylpyrrolidon wird genauso wie in Verfahren 1.b. α und β vorgegangen, wobei aber nach dem Dispergieren die Destillation entfällt und gegebenenfalls vor oder während der radikalischen Polymerisation Vinylmonomere zugegeben werden können. Die Polymerisation wird wie in Verfahren 1.b. α und β durchgeführt. Der Lösemittelgehalt liegt im Bereich von 0,1 bis 30 Gew.-%, besonders bevorzugt von 1 bis 15 Gew.-%, bezogen auf die gesamt Bindemittel-Dispersion.

Aufgrund ihres chemischen Aufbaus sind die erfindungsgemäßen Polyurethan-Dispersionen für eine vielseitige Anwendung geeignet, z.B. zur Herstellung von Beschichtungssystemen, unter anderem für die Beschichtung von Holz, als Bindemittel für wasserverdünnbare Klebstoffe oder als Harze für Druckfarben.

Sie sind kombinierbar und im allgemeinen verträglich mit anderen wäßrigen Kunststoffdispersionen und -lösungen, z.B. Acryl- und/oder Methacrylpolymerisaten, Polyurethan, Polyharnstoff-, Polyester- sowie Epoxidharzen, Thermoplasten auf Basis von Polyvinylacetat,
-vinylchlorid, -vinylether, -chloropren, -acrylnitril, Äthylen-Butadien-styrol-Copolymerisaten. Sie lassen sich auch mit verdickend wirkenden Substanzen auf Basis von carboxylgruppenhaltigen Polyacrylaten bzw. Polyurethanen, Hydroxyethylcellulose, Polyvinylalkoholen sowie anorganischen Thixotropierungsmitteln, wie Bentonit, Natrium-Magnesium- und Natrium-Magnesium-Fluor-Lithium-Silikate, kombinieren.

Die erfindungsgemäßen Polyurethan-Dispersionen lassen sich auf die verschiedensten Substrate, z.B. Keramik, Holz, Glas, Beton, vorzugsweise Kunststoffe, wie Polycarbonat, Polystyrol, Polyvinylchlorid, Polyester, Poly(meth)acrylate, Acrylnitril-Butadien-Styrol-Polymerisate und dergleichen, sowie vorzugsweise auf Metall, wie Eisen, Kupfer, Aluminium, Stahl, Messing, Bronze, Zinn, Zink, Titan, Magnesium und dergleichen aufbringen. Sie haften auf den verschiedenen Unterlagen ohne haftvermittelnde Grundierungen bzw. Zwischenschichten.

Die erfindungsgemäßen Polyurethan-Dispersionen sind z.B. für die Herstellung von korrosionsschützenden Überzügen und/oder Zwischenbeschichtungen für die verschiedensten Anwendungsgebiete geeignet, insbesondere zur Herstellung von Metallic- und Unibasislacken in Mehrschicht-Lackaufbauten für die Gebiete der Automobil- und Kunststofflackierung und zur Erzeugung von Grundierungslacken für das Gebiet der Kunststofflackierung.

Aufgrund von kurzen Ablüftzeiten der auf den erfindungsgemäßen Polyurethan-Dispersionen basierenden Basislacke kann die pigmentierte Basislackschicht ohne Einbrennschritt (Naß-in Naß-Verfahren) mit einem Klarlack überlackiert und anschließend zusammen eingebrannt oder forciert getrocknet werden. Basislacke, hergestellt mit den erfindungsgemäßen Polyurethan-Dispersionen, liefern weitgehend unabhängig von der Einbrenn- bzw. Trocknungstemperatur Lackfilme gleicher Qualität, so daß sie sowohl als Reparaturlack von Kraftfahrzeugen als auch als Einbrennlack bei der Serienlackierung von Kraftfahrzeugen eingesetzt werden können. In beiden Fällen resultieren Lackfilme mit einer guten Haftung auch auf der Originallackierung und mit einer guten Beständigkeit gegenüber Schwitzwasser. Weiterhin wird die Brillanz der Lackschicht nach einem Schwitzwassertest nicht nennenswert verschlechtert.

Bei der Formulierung von wasserverdünnbaren Lacken mit den erfindungsgemäßen Polyurethan-Dispersionenn können die in der Lackindustrie üblichen Vernetzer, wie z.B. wasserlösliche oder -emulgierbare Melamin- oder Benzoguanaminharze, Polyisocyanate oder Präpolymeren mit endständigen Isocyanatgruppen, wasserlösliche oder -dispergierbarePolyaziridine und blockierte Polyisocyanate zugesetzt werden. Die wäßrigen Beschichtungssysteme können alle bekannten und in der Lacktechnologie üblichen anorganischen oder organischen Pigmente bzw. Farbstoffe, sowie Netzmittel, Entschäumer, Verlaufsmittel, Stabilisatoren, Katalysatoren, Füllstoffe, Weichmacher und Lösemittel enthalten.

Die erfindungsgemäßen Polyurethan-Dispersionen können auch unmittelbar zum Verkleben beliebiger Substrate verwendet werden. Zur Erzielung von speziellen Klebeeigenschaften können die erfindungsgemäßen Polyurethan-Dispersionen mit anderen Kunststoffdispersionen oder -lösungen (siehe oben) abgemischt werden. Ferner können zur Verbesserung der Wärmestand- und Schälfestigkeit Vernetzer, wie z.B. Polyisocyanate oder Präpolymere mit terminalen Isocyanatgruppen, wasserlösliche oder -emulgierbare Melamin- oder Benzoguanaminharze zugesetzt werden.

Die auf den erfindungsgemäßen Polyurethan-Dispersionen basierenden Klebstoffe können die in der Klebstofftechnologie üblichen Zusatzstoffe, wie Weichmacher, Lösungsmittel, Filmbindehilfsmittel, Füllstoffe, synthetische und natürliche Harze enthalten. Sie eignen sich speziell zur Herstellung von Verklebungen von Substraten in der Kraftfahrzeugindustrie, z.B. Verklebung von Innenausbauteilen, und in der Schuhindustrie, z.B. zum Verkleben von Schuhsohle und Schuhschaft. Die Herstellung und Verarbeitung der auf den erfindungsgemäßen Polyurethan-Dispersionen basierenden Klebstoffe erfolgt nach den üblichen Methoden der Klebetechnologie, die bei wäßrigen Dispersions- und Lösungsklebstoffen angewendet werden.

### Beispiel 1:

357 g eines Polyesters, hergestellt aus Hexandiol-1,6, Isophthal- und Adipinsäure, mit einer Hydroxylzahl von 84 und einer Säurezahl unter 4 werden zusammen mit 32,6 g Dimethylolpropionsäure und 5,6 g Butandiol-1,4 auf 130 °C erhitzt und bei dieser Temperatur gehalten, bis eine homogene Lösung vorliegt. Anschließend werden über einen Zeitraum von 30 bis 35 Minuten 99,2 g Tetramethylxylylendiisocyanat unter Rühren zudosiert und weiter bei 130 °C so lange gerührt, bis keine freien Isocyanatgruppen mehr vorliegen.

Nach Abkühlung auf 70 °C werden eine Lösung, bestehend aus 65,6 g Methylmethacrylat, 6,3 g Glycerinmonomethacrylat und 0,12 g 2,6-Di-tert.-butyl-4-methylphenol rasch zugegeben und homogenisiert. Anschließend werden 24,3 g Tetramethylxylylendiisocyanat über einen Zeitraum von 30 Minuten zugegeben und bei 70 °C umgesetzt, bis der Gehalt an freien Isocyanatgruppen kleiner 0,05 Gew.-%, bezogen auf die Gesamteinwaage, beträgt. Nach Zugabe von 18,5 g Triethylamin wird 5 Minuten homogenisiert. Anschließend werden 1030 g Wasser mit einer Temperatur von 95 °C zu der Präpolymer-Lösung unter intensivem Rühren gegeben. Nach Abkühlung auf 80 °C wird eine weitere Stunde gerührt. Zu der so hergestellten Dispersion werden 10 Vol-% einer Ammoniumperoxodisulfat-Lösung, bestehend aus 0,8 g Ammoniumperoxodisulfat und 50 g Wasser, bei 80 °C zugegeben. Die restliche Menge der Ammoniumperoxodisulfat-Lösung wird über einen Zeitraum von 30 Minuten dosiert.

Anschließend wird die Temperatur für weitere 2 Stunden bei 78 bis 80 °C gehalten.

Nach Abkühlung auf Raumtemperatur wird die Dispersion durch ein 5 mm Filter filtriert. Die so erhaltene Dispersion besitzt einen Festkörpergehalt von 34,9 % und einen pH-Wert von 7,52.

### Beispiel 2:

249,8 g eines Polyesters, hergestellt aus Neopentylglykol, Hexandiol-1,6, Isophthal- und Adipinsäure, mit einer Hydroxylzahl von 37 und einer Säurezahl unter 3 werden zusammen mit 24,7 g Dimethylolpropionsäure und 9,3 g Butandiol-1,4 in 150 g Aceton unter Rückfluß gelöst. Anschließend werden 0,1 g 2,6-Di-tert.-butyl-4-methylphenol und 16,6 g Glycerinmonomethacrylat zugegeben und homogenisiert. Nach Zugabe von 134,2 g Tetramethylxylylendiisocyanat wird bei Rückflußtemperatur so lange gerührt, bis der Isocyanatgehalt 1,08 Gew.-%, bezogen auf die Gesamteinwaage, beträgt.

In die so erhaltene Präpolymer-Lösung werden nun 15,5 g Diethanolamin rasch zugegeben und 30 Minuten homogenisiert. Nach Dosierung von 13,1 g Triethylamin werden 1108 g Wasser mit einer Temperatur von 80 °C zu der Polymerlösung unter intensivem Rühren gegeben. Das Lösemittel Aceton wird anschließend durch Vakuumdestillation von der erhaltenen Dispersion abgetrennt. Nach Zugabe von 51,1g Methylmethacrylat wird die Temperatur auf 80 °C erhöht und weitere 30 Minuten gerührt. Anschließend werden 10 Vol-% einer Ammoniumperoxodisulfat-Lösung, bestehend aus 0,8 g Ammoniumperoxodisulfat und 50 g Wasser, bei 80 °C zugegeben. Die restliche Menge der Ammoniumperoxodisulfat-Lösung wird über einen Zeitraum von 30 Minuten dosiert. Die Temperatur wird für weitere 2 Stunden bei 78 bis 80 °C gehalten.

Nach Abkühlung auf Raumtemperatur wird die Dispersion auf einen Festkörpergehalt von 30 % eingestellt und durch ein 5 mm Filter filtriert. Die resultierende Dispersion besitzt einen pH-Wert von 7,46.

### Beispiel 3:

304,4 g Poly(butandioladipiat)diol mit einer OH-Zahl von 45 wird zusammen mit 23,1 g Dimethylolpropionsäure auf 130 °C erwärmt und bei dieser Temperatur mit 40,2 g Toluylendiisocyanat umgesetzt. Das Produkt wird zusammen mit 14,9 g Glycerinmonomethacrylat in 50 g stabilisiertem Methylmethacrylat gelöst und bei 65-70 °C mit 40,8 g Toluylendiisocyanat umgesetzt. Entsprechend dem freien NCO-Gehalt wird mit der äquimolaren Menge Diethanolamin umgesetzt. Anschließend wird mit 12,1 g Triethylamin neutralisiert und mit 674,6 g entionisiertem Wasser dispergiert. Zu dieser Dispersion wird bei 80 °C 51 g einer 2 Gew.-%-igen wäßrigen Lösung von Ammoniumperoxodisulfat zudosiert und anschließend 2 Stunden nachgerührt. Es entsteht eine Dispersion mit einem Feststoffgehalt von 40 Gew.-%, einem pH-Wert von 7,4 und einer dynamischen Viskosität von 352 mPas.

### Beispiel 4:

299,2 g von Poly(butandioladipiat) mit einer OH-Zahl von 45 wird zusammen mit 23,1 g Dimethylolpropionsäure und 18,6 g Hexandiol-1,6 auf 130 °C erwärmt und bei dieser Temperatur mit 66 g Toluylendiisocyanat umgesetzt. Dieses Produkt wird zusammen mit 16,8 g Glycerinmonomethacrylat in 55 g stabilisiertem Methylmethacrylat gelöst und bei 65-70 °C mit 16,3 g Toluylendiisocyanat umgesetzt. Anschließend wird mit 12,2 g Triethylamin neutralisiert und mit 681,8 g entionisiertem Wasser dispergiert. Zu dieser Dispersion wird bei 80 °C 51 g einer 2 Gew.-%-igen wäßrigen Lösung von Natriumperoxodisulfat zudosiert und anschließend 2 Stunden nachgerührt. Die erhaltene Dispersion weist einen Feststoffgehalt von 40 Gew.-%, einen pH-Wert von 7,3 und eine dynamische Viskosität von 18,2 mPas auf.

## Patentansprüche (Patentansprüche für folgende(n) Vertragsstaat(en): AT, BE, CH, DE, DK, FR, GB, IT, LI, NL, SE)

1. Wäßrige Polyurethan-Dispersionen, hergestellt durch radikalisch initiierte Polymerisation von Polyurethan-Makromonomeren mit einem Gehalt an Carboxyl-, Phosphonsäure oder Sulfonsäuregruppen und lateralen Vinylgruppen sowie gegebenenfalls terminalen Vinyl-, Hydroxy-, Urethan-, Thiourethan- und/oder Harnstoffgruppen.

2. Polyurethan-Dispersionen nach Anspruch 1, hergestellt durch Polymerisation von Polyurethan-Makromonomeren, mit einem Gehalt an Carboxyl-, Phosphonsäure- oder Sulfonsäuregruppen sowie terminalen Hydroxylgruppen und lateralen Vinylgruppen, wobei die Polyurethan-Makromonomere erhalten werden durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren sowie Polyisocyanaten und mindestens zwei Hydroxy- sowie mindestens eine Vinylgruppe enthaltenden Monomeren.

3. Polyurethan-Dispersionen nach Anspruch 1, hergestellt durch Polymerisation von Polyurethan-Makromonomeren, erhalten durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren sowie Polyisocyanaten und einem mindestens zwei Hydroxy- sowie mindestens eine Vinylgruppe enthaltenden Monomeren unter Bildung eines Isocyanat- und Carboxyl-, Phosphonsäure- oder Sulfonsäuregruppen sowie laterale Vinylgruppen enthaltenden Makromonomers und Umsetzung des so gebildeten Makromonomers mit Aminen, Alkoholen oder Thioalkoholen.

4. Polyurethan-Dispersionen nach Anspruch 1, hergestellt durch Polymerisation von Carboxyl-, Phosphonsäure- oder Sulfonsäuregruppen, terminale und laterale Vinylgruppen sowie gegebenenfalls Urethan-, Thiourethan- oder Harnstoffgruppen enthaltenden Polyurethan-Makromonomeren, erhalten durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren und Polyisocyanaten und Monomeren, die mindestens eine Vinylgruppe und mindestens zwei Hydroxygruppen enthalten, und anschließende Umsetzung mit einem Monomer, das außer mindestens einer Vinylgruppe noch eine Gruppe enthält, die mit Isocyanatgruppen reagiert, gegebenenfalls zusammen mit primären oder sekundären Aminen, Alkoholen oder Thioalkoholen.

5. Polyurethan-Dispersionen nach Anspruch 1, hergestellt durch Polymerisation von Polyurethan-Makromonomeren, erhalten durch Polyaddition von Polyhydroxy-polyethern, Polyhydroxy-polyestern oder Polyhydroxy-polycarbonaten sowie Polyisocyanaten und einem mindestens zwei Hydroxy- sowie eine Vinylgruppe enthaltenden Monomeren unter Bildung eines Isocyanatgruppen sowie laterale Vinylgruppen enthaltenden Makromonomers und Umsetzung des so gebildeten Makromonomers mit Aminocarbonsäuren, Aminosulfonsäuren, Hydroxycarbonsäuren oder Hydroxysulfonsäuren.

6. Polyurethan-Dispersionen nach Anspruch 1, dadurch gekennzeichnet, daß die Polyhydroxy-polyether, Polyhydroxy-polyester oder Polyhydroxy-polycarbonate Carboxyl-, Phosphonsäure- oder Sulfonsäuregruppen enthalten.

7. Polyurethan-Dispersionen nach Anspruch 1, hergestellt durch radikalisch initiierte Polymerisation in einem als Lösemittel dienenden, mit den Polyurethan-Makromonomeren copolymerisierbaren ungesättigten Monomeren, gegebenenfalls in Gegenwart weiterer copolymerisierbarer ungesättigter Monomeren.

8. Polyurethan-Dispersionen nach Anspruch 1, hergestellt durch radikalisch initiierte Polymerisation in einem Gemisch aus Wasser und einem gegenüber Isocyanatgruppen inerten organischen Lösemittel, gegebenenfalls in Anwesenheit von mit den Polyurethan-Makromonomeren copolymerisierbaren ungesättigten Monomeren, und gegebenenfalls Abdestillation des organischen Lösemittels vor oder nach der radikalischen Polymerisation.

9. Polyurethandispersionen nach Ansprüchen 1 bis 8, dadurch gekennzeichnet, daß die Säuregruppen in neutralisierter Form vorliegen.

10. Verwendung der Polyurethan-Dispersionen nach Anspruch 1 zur Herstellung von Überzügen auf Substrate, als Klebemittel oder als Bindemittel in Druckfarben.

11. Verwendung der Polyurethan-Dispersionen nach Anspruch 1 zur Herstellung von Metallic- und Unibasislacken in Mehrschichtlackaufbauten.

## Patentansprüche (Patentansprüche für folgende(n) Vertragsstaat(en): ES)

1. Verfahren zur Herstellung von wäßrigen Polyurethan-Dispersionen, dadurch gekennzeichnet, daß man Polyurethan-Makromonomere mit einem Gehalt an Carboxyl-, Phosphonsäure oder Sulfonsäuregruppen und lateralen Vinylgruppen sowie gegebenenfalls terminalen Vinyl-, Hydroxy-, Urethan-, Thiourethan- und/oder Harnstoffgruppen mit radikalbildenden Initiatoren polymerisiert.

2. Verfahren nach Anspruch 1, dadurch gekennzeichnet, daß man ein Polyurethan-Makromonomer mit einem Gehalt an Carboxyl-, Phosphonsäure- oder Sulfonsäuregruppen sowie terminalen Hydroxylgruppen und lateralen Vinylgruppen herstellt durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren sowie Polyisocyanaten und mindestens zwei Hydroxy- sowie mindestens eine Vinylgruppe enthaltenden Monomeren und das so erhaltene Polyurethan-Makromonomer mit radikalbildenden Initiatoren polymerisiert.

3. Verfahren nach Anspruch 1, dadurch gekennzeichnet, daß man ein Polyurethan-Makromonomer mit einem Gehalt an Isocyanat- und Carboxyl-, Phosphonsäure- oder Sulfonsäuregruppen sowie lateralen Vinylgruppen herstellt durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren sowie Polyisocyanaten und einem mindestens zwei Hydroxy- sowie mindestens eine Vinylgruppe enthaltenden Monomeren, das so gebildete Makromonomer mit Aminen, Alkoholen oder Thioalkoholen umsetzt und dieses Polyure than-Makromonomer abschließend mit radikalbildenden Initiatoren polymerisiert.

4. Verfahren nach Anspruch 1, dadurch gekennzeichnet, daß man ein Carboxyl-, Phosphonsäure- oder Sulfonsäuregruppen, terminale und laterale Vinylgruppen sowie gegebenenfalls Urethan-, Thiourethan- oder Harnstoffgruppen enthaltendes Polyurethan-Makromonomer herstellt durch Polyaddition von Polyhydroxy-polyethern, Polyhydroxy-polyestern oder Polyhydroxy-polycarbonaten sowie Polyhydroxycarbonsäuren, Polyhydroxyphosphonsäuren oder Polyhydroxysulfonsäuren und Polyisocyanaten und Monomeren, die mindestens eine Vinylgruppe und mindestens zwei Hydroxygruppen enthalten, das so gebildete Makromonomer mit einem Monomer umsetzt, das außer mindestens einer Vinylgruppe noch eine Gruppe enthält, die mit Isocyanatgruppen reagiert, gegebenenfalls zusammen mit primären oder sekundären Aminen, Alkoholen oder Thioalkoholen, und dieses Polyurethan-Makromonomer abschließend mit radikalbildenden Initiatoren polymerisiert.

5. Verfahren nach Anspruch 1, dadurch gekennzeichnet, daß man ein Isocyanatgruppen sowie laterale Vinylgruppen enthaltendes Polyurethan-Makromonomer herstellt durch Polyaddition von Polyhydroxy-polyethern, Polyhydroxy-polyestern oder Polyhydroxy-polycarbonaten sowie Polyisocyanaten und einem mindestens zwei Hydroxy- sowie eine Vinylgruppe enthaltenden Monomeren, das so gebildete Makromonomer mit Aminocarbonsäuren, Aminosulfonsäuren, Hydroxycarbonsäuren oder Hydroxysulfonsäuren umsetzt und dieses Polyurethan-Makromonomer abschließend mit radikalbildenden Initiatoren polymerisiert.

6. Verfahren nach Anspruch 1, dadurch gekennzeichnet, daß man als Ausgangsverbindungen solche Polyhydroxy-polyether, Polyhydroxy-polyester oder Polyhydroxy-polycarbonate nimmt die Carboxyl-, Phosphonsäure- oder Sulfonsäuregruppen enthalten.

7. Verfahren nach Anspruch 1, dadurch gekennzeichnet, daß man die radikalisch initiierte Polymerisation in einem als Lösemittel dienenden, mit den Polyurethan-Makromonomeren copolymerisierbaren ungesättigten Monomeren, gegebenenfalls in Gegenwart weiterer copolymerisierbarer ungesättigter Monomeren, durchführt.

8. Verfahren nach Anspruch 1, dadurch gekennzeichnet, daß man die radikalisch initiierte Polymerisation in einem Gemisch aus Wasser und einem gegenüber Isocyanatgruppen inerten organischen Lösemittel, gegebenenfalls in Anwesenheit von mit den Polyurethan-Makromonomeren copolymerisierbaren ungesättigten Monomeren durchführt und gegebenenfalls das organische Lösemittel vor oder nach der radikalischen Polymerisation abdestilliert.

9. Verfahren nach den Ansprüchen 1 bis 8, dadurch gekennzeichnet, daß die Säuregruppen in neutralisierter Form vorliegen.

10. Verwendung der Polyurethan-Dispersionen, hergestellt nach Anspruch 1 zur Herstellung von Überzügen auf Substrate, als Klebemittel oder als Bindemittel in Druckfarben.

11. Verwendung der Polyurethan-Dispersionen, hergestellt nach Anspruch 1 zur Herstellung von Metallic- und Unibasislacken in Mehrschichtlackaufbauten.

## Claims (Claims for the following Contracting State(s): AT, BE, CH, DE, DK, FR, GB, IT, LI, NL, SE)

1. Aqueous polyurethane dispersions prepared by polymerization, initiated by free radicals, of polyurethane macromonomers containing carboxyl, phosphonic acid or sulfonic acid groups and lateral vinyl groups and optionally terminal vinyl, hydroxyl, urethane, thiourethane and/or urea groups.

2. Polyurethane dispersions as claimed in claim 1, prepared by polymerization of polyurethane macromonomers containing carboxyl, phosphonic acid or sulfonic acid groups as well as terminal hydroxyl groups and lateral vinyl groups, the polyurethane macromonomers being obtained by polyaddition of polyhydroxypolyethers, polyhydroxy-polyesters or polyhydroxy-polycarbonates as well as polyhydroxycarboxylic acids, polyhydroxyphosphonic acids or polyhydroxysulfonic acids, and polyisocyanates and monomers containing at least two hydroxyl groups and at least one vinyl group.

3. Polyurethane dispersions as claimed in claim 1, prepared by polymerization of polyurethane macromonomers obtained by polyaddition of polyhydroxypolyethers, polyhydroxy-polyesters or polyhydroxy-polycarbonates, as well as polyhydroxycarboxylic acids, polyhydroxyphosphonic acids or polyhydroxysulfonic acids, and polyisocyanates and a monomer containing at least two hydroxyl groups and at least one vinyl group to form a macromonomer containing isocyanate and carboxyl, phosphonic acid or sulfonic acid groups as well as lateral vinyl groups, and reaction of the macromonomer thus formed with amines, alcohols or thioalcohols.

4. Polyurethane dispersions as claimed in claim 1, prepared by polymerization of polyurethane macromonomers which contain carboxyl, phosphonic acid or sulfonic acid groups, terminal and lateral vinyl groups and optionally urethane, thiourethane or urea groups and are obtained by polyaddition of polyhydroxy-polyethers, polyhydroxy-polyesters or polyhydroxy-polycarbonates as well as polyhydroxycarboxylic acids, polyhydroxyphosphonic acids or polyhydroxysulfonic acids, and polyisocyanates and monomers containing at least one vinyl group and at least two hydroxyl groups, and subsequent reaction with a monomer which, in addition to at least one vinyl group, also contains a group which reacts with isocyanate groups, optionally together with primary or secondary amines, alcohols or thioalcohols.

5. Polyurethane dispersions as claimed in claim 1, prepared by polymerization of polyurethane macromonomers obtained by polyaddition of polyhydroxy-polyethers, polyhydroxy-polyesters or polyhydroxy-polycarbonates and polyisocyanates and a monomer containing at least two hydroxyl groups and one vinyl group to form a macromonomer containing isocyanate groups and lateral vinyl groups, and reaction of the macromonomer thus formed with aminocarboxylic acids, aminosulfonic acids, hydroxycarboxylic acids or hydroxysulfonic acids.

6. Polyurethane dispersions as claimed in claim 1, wherein the polyhydroxy-polyethers, polyhydroxy-polyesters or polyhydroxy-polycarbonates contain carboxyl, phosphonic acid or sulfonic acid groups.

7. Polyurethane dispersions as claimed in claim 1, prepared by polymerization initiated by free radicals, in an unsaturated monomer which serves as the solvent and is copolymerizable with the polyurethane macromonomers, if appropriate in the presence of further copolymerizable unsaturated monomers.

8. Polyurethane dispersions as claimed in claim 1, prepared by polymerization initiated by free radicals, in a mixture of water and an organic solvent which is inert toward isocyanate groups, if appropriate in the presence of unsaturated monomers which can be copolymerized with the polyurethane macromonomers, and if appropriate removal of the organic solvent by distillation before or after the free-radical polymerization.

9. Polyurethane dispersions as claimed in claims 1 to 8, wherein the acid groups are present in neutralized form.

10. The use of the polyurethane dispersions as claimed in claim 1 for the production of coatings on substrates, as adhesives or as binders in printing inks.

11. The use of the polyurethane dispersions as claimed in claim 1 for the preparation of metallic and solid base paints in multi-coat build-ups of paint.

## Claims (Claims for the following Contracting State(s): ES)

1. A process for the preparation of aqueous polyurethane dispersions, wherein polyurethane macromonomers containing carboxyl, phosphonic acid or sulfonic acid groups and lateral vinyl groups and optionally terminal vinyl, hydroxyl, urethane thiourethane and/or urea groups are polymerized with free-radical-forming initiators.

2. The process as claimed in claim 1, wherein a polyurethane macromonomer containing carboxyl, phosphonic acid or sulfonic acid groups as well as terminal hydroxyl groups and lateral vinyl groups is prepared by polyaddition of polyhydroxy-polyethers, polyhydroxy-polyestersor polyhydroxy-polycarbonatesas well as polyhydroxycarboxylic acids, polyhydroxyphosphonic acids or polyhydroxysulfonic acids, and polyisocyanates and monomers containing at least two hydroxyl groups and at least one vinyl group, and the polyurethane macromonomers obtained in this way is polymerized with free-radical-forming initiators.

3. The process as claimed in claim 1, wherein a polyurethane macromonomer containing isocyanate and carboxyl, phosphonic acid or sulfonic acid groups and lateral vinyl groups is prepared by polyaddition of polyhydroxy-polyethers, polyhydroxy-polyesters or polyhydroxy-polycarbonates, and polyhydroxycarboxylic acids, polyhydroxyphosphonic acids or polyhydroxysulfonic acids, and polyisocyanates and a monomer containing at least two hydroxyl groups and at least one vinyl group, the macromonomer obtained in this way is reacted with amines, alcohols or thioalcohols, and the resulting polyurethane macromonomer is finally polymerized with free-radical-forming initiators.

4. The process as claimed in claim 1, wherein a polyurethane macromonomer which contains carboxyl, phosphonic acid or sulfonic acid groups, terminal and lateral vinyl groups and optionally urethane, thiourethane or urea groups, is prepared by polyaddition of polyhydroxy-polyethers, polyhydroxy-polyesters or polyhydroxy-polycarbonates as well as polyhydroxycarboxylic acids, polyhydroxyphosphonic acids or polyhydroxysulfonic acids, and polyisocyanates and monomers containing at least one vinyl group and at least two hydroxyl groups, the macromonomer thus obtained is reacted with a monomer which, in addition to at least one vinyl group, also contains a group which reacts with isocyanate groups, optionally together with primary or secondary amines, alcohols or thioalcohols, and the resulting polyurethane macromonomer is finally polymerized with free-radical-forming initiators.

5. The process as claimed in claim 1, wherein a polyurethane macromonomer containing isocyanate groups and lateral vinyl groups is prepared by polyaddition of polyhyd roxy-polyethers, polyhydroxy-polyesters or polyhydroxy-polycarbonates and polyisocyanates and a monomer containing at least two hydroxyl groups and one vinyl group, the macromonomer thus formed is reacted with aminocarboxylic acids, aminosulfonic acids, hydroxycarboxylic acids or hydroxysulfonic acids, and the resulting polyurethane macromonomer is finally polymerized with free-radical-forming initiators.

6. The process as claimed in claim 1, wherein the polyhydroxy-polyethers, polyhydroxy-polyesters or polyhydroxy-polycarbonates used as starting compounds contain carboxyl, phosphonic acid or sulfonic acid groups.

7. The process as claimed in claim 1, wherein the polymerization initiated by free radicals is conducted in an unsaturated monomer which serves as the solvent and is copolymerizable with the polyurethane macromonomers, if appropriate in the presence of further copolymerizable unsaturated monomers.

8. The process as claimed in claim 1, wherein the polymerization initiated by free radicals is conducted in a mixture of water and an organic solvent which is inert toward isocyanate groups, if appropriate in the presence of unsaturated monomers which can be copolymerized with the polyurethane macromonomers, and if appropriate the organic solvent is removed by distillation before or after the free-radical polymerization.

9. The process as claimed in claims 1 to 8, wherein the acid groups are present in neutralized form.

10. The use of the polyurethane dispersions prepared as claimed in claim 1 for the production of coatings on substrates, as adhesives or as binders in printing inks.

11. The use of the polyurethane dispersions prepared as claimed in claim 1 for the preparation of metallic and solid base paints in multi-coat build-ups of paint.

## Revendications (Revendications pour l'(les) Etat(s) contractant(s) suivant(s): AT, BE, CH, DE, DK, FR, GB, IT, LI, NL, SE)

1. Dispersions aqueuses de polyuréthane, préparées par polymérisation radicalaire de macromonomères polyuréthane contenant des groupes carboxyle, acide phosphonique ou acide sulfonique et des groupes vinyle latéraux, ainsi qu'éventuellement des groupes terminaux vinyle, hydroxy, uréthane, thiouréthane et/ou urée.

2. Dispersions de polyuréthane selon la revendication 1, préparées par polymérisation de macromonomères polyuréthane contenant des groupes carboxyle, acide phosphonique ou acide sulfonique, ainsi que des groupes hydroxy terminaux et des groupes vinyle latéraux, les macromonomères polyuréthane étant obtenus par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et des monomères contenant au moins deux groupes hydroxy et au moins un groupe vinyle.

3. Dispersions de polyuréthane selon la revendication 1, préparées par polymérisation de macromonomères polyuréthane, obtenus par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et un monomère contenant au moins deux groupes hydroxy et au moins un groupe vinyle, formant un macromonomère contenant des groupes isocyanate et des groupes carboxyle, acide phosphonique ou acide sulfonique, ainsi que des groupes vinyle latéraux, et réaction du macromonomère ainsi formé avec des amines, des alcools ou des thiols.

4. Dispersions de polyuréthane selon la revendication 1, préparées par polymérisation de macromonomères polyuréthane contenant des groupes carboxyle, acide phosphonique ou acide sulfonique, des groupes vinyle latéraux et terminaux et éventuellement des groupes uréthane, thiouréthane ou urée, obtenus par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et des monomères contenant au moins un groupe vinyle et au moins deux groupes hydroxy, puis réaction avec un monomère qui, outre au moins un groupe vinyle, contient de plus un groupe qui réagit avec les groupes isocyanate, éventuellement avec des amines primaires ou secondaires, des alcools ou des thiols.

5. Dispersions de polyuréthane selon la revendication 1, préparées par polymérisation de macromonomères polyuréthane obtenus par polyaddition de polyhydroxypolyéthers, de polyhydroxypolyesters ou de polyhydroxypolycarbonates et de polyisocyanates et d'un monomère contenant au moins deux groupes hydroxy et un groupe vinyle, formant un macromonomère contenant des groupes isocyanate et des groupes vinyle latéraux, et réaction du macromonomère ainsi formé avec des acides aminocarboxyliques, des acides aminosulfoniques, des acides hydroxycarboxyliques ou des acides hydroxysulfoniques.

6. Dispersions de polyuréthane selon la revendication 1, caractérisées en ce que les polyhydroxypolyéthers, les polyhydroxypolyesters ou les polyhydroxypolycarbonates contiennent des groupes carboxyle, acide phosphonique ou acide sulfonique.

7. Dispersions de polyuréthane selon la revendication 1, préparées par polymérisation radicalaire dans un monomère insaturé servant de solvant, copolymérisable avec les macromonomères polyuréthane, éventuellement en présence d'autres monomères insaturés copolymérisables.

8. Dispersions de polyuréthane selon la revendication 1, préparées par polymérisation radicalaire dans un mélange d'eau et d'un solvant organique inerte vis-à-vis des groupes isocyanate, éventuellement en présence de monomères insaturés copolymérisables avec les macromonomères polyuréthane, et éventuellement distillation du solvant organique avant ou après la polymérisation radicalaire.

9. Dispersions de polyuréthane selon les revendications 1 à 8, caractérisées en ce que les groupes acides sont sous forme neutralisée.

10. Utilisation des dispersions de polyuréthane selon la revendication 1 pour la production de revêtements sur des substrats, comme colles ou comme liants dans des encres d'imprimerie.

11. Utilisation des dispersions de polyuréthane selon la revendication 1 pour la production de peintures de base métalliques et unies dans des systèmes de peintures à plusieurs couches.

## Revendications (Revendications pour l'(les) Etat(s) contractant(s) suivant(s): ES)

1. Procédé de préparation de dispersions aqueuses de polyuréthane, caractérisé en ce que l'on polymérise avec des amorceurs formateurs de radicaux des macromonomères polyuréthane contenant des groupes carboxyle, acide phosphonique ou acide sulfonique et des groupes vinyle latéraux, ainsi qu'éventuellement des groupes terminaux vinyle, hydroxy, uréthane, thiouréthane et/ou urée.

2. Procédé selon la revendication 1, caractérisé en ce l'on prépare un macromonomère polyuréthane contenant des groupes carboxyle, acide phosphonique ou acide sulfonique, ainsi que des groupes hydroxy terminaux et des groupes vinyle latéraux par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et des monomères contenant au moins deux groupes hydroxy et au moins un groupe vinyle, et l'on polymérise le macromonomère polyuréthane ainsi obtenu avec des amorceurs formateurs de radicaux.

3. Procédé selon la revendication 1, caractérisé en ce que l'on prépare un macromonomère polyuréthane contenant des groupes isocyanate et des groupes carboxyle, acide phosphonique ou acide sulfonique, ainsi que des groupes vinyle latéraux, par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et un monomère contenant au moins deux groupes hydroxy et au moins un groupe vinyle, on fait réagir le macromonomère ainsi formé avec des amines, des alcools ou des thiols, et on polymérise finalement ce macromonomère polyuréthane avec des amorceurs formateurs de radicaux.

4. Procédé selon la revendication 1, caractérisé en ce que l'on prépare un macromonomère polyuréthane contenant des groupes carboxyle, acide phosphonique ou acide sulfonique, des groupes vinyle latéraux et terminaux et éventuellement des groupes uréthane, thiouréthane ou urée, par polyaddition de polyhydroxypolyéthers, de polyhydroxypolyesters ou de polyhydroxypolycarbonates avec des acides polyhydroxycarboxyliques, des acides polyhydroxyphosphoniques ou des acides polyhydroxysulfoniques, et des polyisocyanates et des monomères contenant au moins un groupe vinyle et au moins deux groupes hydroxy, on fait réagir le macromonomère ainsi formé avec un monomère qui, outre au moins un groupe vinyle, contient de plus un groupe qui réagit avec les groupes isocyanate, éventuellement avec des amines primaires ou secondaires, des alcools ou des thiols, et on polymérise finalement ce macromonomère polyuréthane avec des amorceurs formateurs de radicaux.

5. Procédé selon la revendication 1, caractérisé en ce que l'on prépare un macromonomère polyuréthane contenant des groupes isocyanate et des groupes vinyle latéraux par polyaddition de polyhydroxypolyéthers, de polyhydroxypolyesters ou de polyhydroxypolycarbonates avec des polyisocyanates et un monomère contenant au moins deux groupes hydroxy et un groupe vinyle, on fait réagir le macromonomère ainsi formé avec des acides aminocarboxyliques, des acides aminosulfoniques, des acides hydroxycarboxyliques ou des acides hydroxysulfoniques, et on polymérise finalement ce macromonomère polyuréthane avec des amorceurs formateurs de radicaux.

6. Procédé selon la revendication 1, caractérisé en ce que l'on utilise comme produits de départ des polyhydroxypolyéthers, des polyhydroxypolyesters ou des polyhydroxypolycarbonates contenant des groupes carboxyle, acide phosphonique ou acide sulfonique.

7. Procédé selon la revendication 1, caractérisé en ce que l'on effectue la polymérisation radicalaire dans un monomère insaturé servant de solvant, copolymérisable avec les macromonomères polyuréthane, éventuellement en présence d'autres monomères insaturés copolymérisables.

8. Procédé selon la revendication 1, caractérisé en ce que l'on effectue la polymérisation radicalaire dans un mélange d'eau et d'un solvant organique inerte vis-à-vis des groupes isocyanate, éventuellement en présence de monomères insaturés copolymérisables avec les macromonomères polyuréthane, et on distille éventuellement le solvant organique avant ou après la polymérisation radicalaire.

9. Procédé selon les revendications 1 à 8, caractérisé en ce que les groupes acides sont sous forme neutralisée.

10. Utilisation des dispersions de polyuréthane préparées selon la revendication 1 pour la production de revêtements sur des substrats, comme colles ou comme liants dans des encres d'imprimerie.

11. Utilisation des dispersions de polyuréthane préparées selon la revendication 1 pour la production de peintures de base métalliques et unies dans des systèmes de peintures à plusieurs couches.
